# EUROPÄISCHE PATENTSCHRIFT

(11) **EP 2 508 328 B1**
(45) Veröffentlichungstag und Bekanntmachung des Hinweises auf die Patenterteilung: **17.05.2017**
(21) Anmeldenummer: 12163383.8
(22) Anmeldetag: 05.04.2012
(51) Int. Cl.: B29C 70/44, B29C 70/54

(54) **Herstellung von faserverstärkten Kunststoffen**
Production of fibre-reinforced plastics
Fabrication de plastiques renforcés par des fibres

(30) Priorität: 07.04.2011 DE 102011016368
(43) Veröffentlichungstag der Anmeldung: 10.10.2012
(73) Patentinhaber: Deutsches Zentrum für Luft- und Raumfahrt e.V., 51147 Köln (DE)
(72) Erfinder: Niemann, Steffen, 38440 Wolfsburg (DE); Kleineberg, Markus, 30966 Hemmingen (DE); Nickel, Jörg, 38104 Braunschweig (DE); Hühne, Christian, 30173 Hannover (DE)
(74) Vertreter: Gerstein, Hans Joachim

(56) Entgegenhaltungen:
- EP-A1- 1 555 104
- EP-B1- 1 131 195
- WO-A1-2006/058541
- DE-A1-102007 013 987
- US-A- 4 997 606
- US-B1- 7 147 818

## Beschreibung

Die vorliegende Erfindung betrifft ein Verfahren zur Herstellung von faserverstärkten Kunststoffen durch Injektion eines Matrixmaterials in ein trockenes Fasermaterial.

Die stetig steigende Verwendung von Bauteilen aus Faserkunststoffverbunden (FKV) erfordert die Entwicklung neuer, hoch automatisierter und qualitätsgesicherter Herstellungsverfahren. Dabei lassen sich grundsätzlich drei Herstellungsverfahren unterscheiden: Nasslaminierverfahren, Prepreg und Injektionsverfahren.

Bei den Prepreg-Verfahren erfolgt die Bauteilherstellung mit Hilfe von vorgefertigten, bereits mit Harz durchtränkten Faserhalbzeugen beziehungsweise Fasermaterialien, sogenannte Prepregs. Die dabei verwendeten Faserhalbzeuge werden mit Harz getränkt und bis zur endgültigen Verwendung kühl gelagert. Zur Herstellung eines Bauteils nach diesem Verfahren werden die Prepregs dann unter Absaugung von Lufteinschlüssen und Herstellung eines Vakuums in einem Autoklaven (Druckbehälter) unter Druck und Temperatur fertig ausgehärtet.

Der Nachteil dabei ist, dass die bereits mit Harz getränkten Prepregs bei tiefer Temperatur gelagert werden müssen, um die fortschreitende Aushärtung des Harzes zu verhindern, was letztendlich die Fertigungskosten aufgrund der erhöhten Lagehaltungskosten erhöht.

Im Gegensatz dazu wird bei dem Injektionsverfahren das Fasermaterial beziehungsweise Faserhalbzeug während des eigentlichen Herstellungsverfahrens erst in dem Formwerkzeug mit dem Harz infiltriert, so dass eine aufwendige und teure Lagerhaltung, wie das bei den Prepregs der Fall ist, nicht notwendig ist.

Hierbei kommen zum Teil sehr komplexe, druckstabile, allseitig geschlossene und dadurch sehr teure Formwerkzeuge zum Einsatz, so dass die Herstellung von komplexen Bauteilen mit Hilfe des Injektionsverfahrens- und Werkzeugen einen sehr hohen Anlagenaufwand erfordert. Dabei ist es besonders nachteilig, dass der Anlagenaufbau von der Größe des herzustellenden Bauteils abhängt, da sich die Formwerkzeuge zur Herstellung des Bauteils während des Evakuierungs- und Infiltrationsprozesses in einem Autoklaven beziehungsweise Druckbehälter befinden müssen, was zu einem deutlich höherem Anlagenaufwand führt. Gerade bei sich selbst tragenden Einseitenwerkzeugen werden aufwendige und teure Autoklave benötigt. Allerdings lassen sich mit Hilfe des Injektionsverfahrens Bauteile mit einem Faservolumengehalt von circa 60 % und so mit einer hohen mechanischen Belastbarkeit im Vergleich mit Prepregbauteilen herstellen.

Aus der EP 1 131 195 B1 ist beispielsweise eine Vorrichtung zur Herstellung eines faserverstärkten Kunststoffes bekannt, bei der die herzustellende Form in einem Autoklaven beziehungsweise Druckbehälter vor dem eigentlichen Herstellungsprozess eingebracht wird. Die Form ist dabei mit einer gemeinsamen Leitung zum Evakuieren der Form sowie zur Injektion des Harzes verbunden, wobei der Vorratsbehälter, welcher das zu injizierende Harz bereitstellt, über eine Drucktransferleitung mit dem Autoklaven zwecks Druckausgleichs in Verbindung steht. Zwar lässt sich durch die Verwendung einer einzigen Leitung der Anlagenaufbau ein Stück vereinfachen, jedoch sind durch die Verwendung eines Autoklaven und einer damit einhergehenden Drucktransferleitung zwischen Vorratsbehälter und Autoklaven noch erhebliche Anlagekosten notwendig.

Aus der DE 100 13 409 C1 sowie US 4,942,013 ist beispielsweise für ein Einseiten-Formwerkzeug eine autoklav-lose Vorrichtung zum Infiltrieren eines Faserhalbzeuges bekannt. Dazu wird an einem Ende des Formwerkzeuges eine Vakuumleitung angeordnet und an einer gegenüberliegenden Seite eine zweite Leitung für das zu injizierende Harz bereitgestellt, so dass über die Vakuumleitung ständig eine Druckdifferenz erzeugt wird. Aufgrund dieser Druckdifferenz wird das Harz in die Form eingesaugt und so das Fasermaterial mit Harz filtriert.

Die Verwendung einer separaten Leitung zur Injektion des Harzes und zur Evakuierung des Bauteils hat dabei den Nachteil, dass neben einem erhöhten Anlagenaufwand und somit erheblichen Mehrkosten die Evakuierungsleitung während des Infusionsprozesses geöffnet bleiben muss, um das benötigte Druckgefälle zwischen Bauteilinnerem und Harzreservoir aufrecht zu erhalten. Um jedoch zu vermeiden, dass Harz in die Evakuierungsleitung aufsteigt, wird hier eine sogenannte Harzfalle benötigt die verhindert, dass aufsteigendes Harz in die Vakuumpumpe gelangt, was zu einer Beschädigung derselben führen würde. Neben den zusätzlichen Kosten für die Harzfalle ist hierbei ein großer Nachteil, dass sich Harz, welches sich in dem Behälter sammelt, bei Überschreiten einer gewissen Menge selbst entfachen kann und zu einer Feuergefahr mit stark toxischer Gasbildung führen kann.

### Aufgabe

Es ist daher Aufgabe der vorliegenden Erfindung ein Verfahren zur Herstellung faserverstärkter Kunststoffe anzugeben, die einen geringen Anlagenaufwand erfordern und somit für die hochautomatisierte Herstellung von faserverstärkten Kunststoffen verwendet werden kann.

### Lösung

Die Aufgabe wird gelöst mit der eingangs genannten Vorrichtung zur Herstellung von faserverstärkten Kunststoffen durch Injektion eines Matrixmaterials in eine vakuumabdichtbare Form mit einem formgebenden Werkzeug zur Aufnahme eines Fasermaterials, wobei eine kombinierte Injektions- und Evakuierungsleitung an einem ersten Ende mit der vakuumabdichtbaren Form verbunden und an einem zweiten Ende mit einem Vorratsbehälter zur Aufnahme des Matrixmaterials und einer Drucksenke derart verbindbar ist, dass die vakuumabdichtbare Form über die kombinierte Injektions- und Evakuierungsleitung wahlweise mit dem Vorratsbehälter oder der Drucksenke verbunden ist, wobei die Vorrichtung keinen Druckbehälter aufweist, in dem die vakuumabdichtbare Form während des Evakuier- und Injektionsvorgangs verbleibt.Es wird somit vorgeschlagen, dass die Vorrichtung eine kombinierte Injektions- und Evakuierungsleitung aufweist, die an einem Ende mit der Form verbunden ist. Die Form weist ein formgebendes Werkzeug auf, das zur Aufnahme des trockenen Faserhalbzeuges beziehungsweise Fasermaterials vorgesehen ist. An dem anderen Ende ist die kombinierte Injektions- und Evakuierungsleitung mit einem Vorratsbehälter zur Aufnahme des Matrixmaterials (beispielsweise Harz) und mit einer Drucksenke (beispielsweise Vakuumpumpe) derart verbindbar, dass die vakuumabdichtbare Form wahlweise mit dem Vorratsbehälter oder der Drucksenke verbunden ist. So kann in einem ersten Schritt die Verbindung mit der Drucksenke hergestellt werden, so dass die Form evakuiert wird, während in einem darauf folgenden zweiten Schritt der Injektionsprozess erfolgt, in dem die vakuumabdichtbare Form über die kombinierte Injektions- und Evakuierungsleitung mit dem Vorratsbehälter verbunden ist.

Somit wird es möglich, auf einen entsprechenden Druckbehälter (Autoklaven) und der dafür notwendigen Apparatur (beispielsweise Drucktransferleitung) zu verzichten, während nur eine einzige kombinierte Injektions- und Evakuierungsleitung für den Evakuierungsprozess und Infiltrationsprozess verwendet wird. Denn es wurde erkannt, dass bei der Verwendung einer kombinierten Injektions- und Evakuierungsleitung ohne die Verwendung eines Autoklaven sich dennoch ein qualitativ hochwertiges und reproduzierbares Bauteil herstellen lässt. Die entstehende Qualitätsminderung gegenüber Bauteilen, die mit einem Autoklaven-Prozess hergestellt wurden, werden jedoch durch den geringeren Anlagenaufwand und somit eingesparten Kosten aufgehoben, so dass speziell bei kleineren Unternehmen mit begrenzten Investitionsmöglichkeiten und bei der hochautomatisierten Fertigung von Bauteilen die Qualitätsminderung in Kauf genommen werden kann.

Vorteilhafterweise ist der Vorratsbehälter gegenüber der vakuumabdichtbaren Form auf einer horizontal anderen Ebene angeordnet, so dass auf natürlichem Wege ein Differenzdruck hergestellt werden kann. Um den Infusionsdruck leicht zu erhöhen, wird der Vorratsbehälter auf einer höheren Ebene angeordnet. Der einzustellende Differenzdruck kann somit durch entsprechende wohl des Höhenunterschiedes gewählt werden. Er kann demnach negativ, null (auf horizontal gleicher Ebene) oder positiv sein.

Des Weiteren ist es ganz besonders vorteilhaft, wenn der Vorratsbehälter druckdicht verschließbar ist und mit einer Drucksenke und/oder Druckquelle verbunden werden kann. Dann kann der Vorratsbehälter mit einem Unter-/oder Überdruck beaufschlagt werden, so dass auch hierüber entsprechende Druckdifferenzen während des Injektionsprozesses simuliert werden können. Der Vorteil hierbei besteht darin, dass die Verwendung eines druckdichten Vorratsbehälters in den Abmessungen klein gehalten werden kann, während die Verwendung eines Autoklaven beziehungsweise Druckbehälters, in dem die Form eingebracht wird, abhängig ist von der Größe des herzustellenden Bauteils. Die Größe des Vorratsbehälters ist hiervon unabhängig.

Weiterhin ist es ganz besonders vorteilhaft, wenn zur Aufrechterhaltung des Druckunterschiedes zwischen Bauteilinnerem und Harzbehältern sogenannte Kavitäten innerhalb der Form angeordnet werden. Eine solche Kavität kann beispielsweise am Bauteilrand gegenüber der kombinierten Injektions- und Evakuierungsleitung platziert sein, so dass die Kavität erst mit Harz gefüllt wird, wenn das Fasermaterial bereits getränkt ist. Verallgemeinert bedeutet dies, dass die Kavitäten innerhalb der Form derart angeordnet werden, dass sie erst nach der Infiltration des Fasermaterials mit Matrixmaterial infiltriert werden. Besonders vorteilhaft ist es hierbei, wenn der Abstand zwischen den Kavitäten und der kombinierten Injektions- und Evaluierungsleitung maximiert wird.

Im Übrigen wird die Aufgabe erfindungsgemäß gelöst mit einem Verfahren zur Herstellung von faserverstärkten Kunststoffen durch Injektion eines Matrixmaterials in eine vakuumabdichtbare Form mit einem formgebenden Werkzeug zur Aufnahme eines Fasermaterials, wobei eine kombinierte Injektions- und Evakuierungsleitung an einem ersten Ende mit der vakuumabdichtbaren Form und an einem zweiten Ende wahlweise mit einem Vorratsbehälter zur Aufnahme des Matrixmaterials und/oder eine Drucksenke derart verbunden wird, dass die Injektion des Matrixmaterials und die Evakuierung der Form über die kombinierte Injektions- und Evakuierungsleitung erfolgt, wobei die vakuumabdichtbare Form während des Evakuier- und Injektionsvorgangs nicht in einem Druckbehälter verbleibt.

In einer ersten Stufe wird die kombinierte Injektions- und Evakuierungsleitung zur Evakuierung der Form mit der Drucksenke, wobei in einer zweiten Stufe die Injektion des Matrixmaterials erfolgt. Die Injektion des Matrixmaterials erfolgt dabei nach Erreichen des Endvakuums in der Form, wobei die Verbindung zur Drucksenke unterbrochen wird und die kombinierte Injektions- und Evakuierungsleitung mit dem das Matrixmaterial enthaltenen Vorratsbehälter verbunden wird.

Weitere vorteilhafte Ausgestaltungen befinden sich in den entsprechenden Unteransprüchen.

So ist es beispielsweise ganz besonders vorteilhaft, wenn in der Form eine Fließhilfe eingelegt wird, um die Verteilung des Matrixmaterials zu beschleunigen. So kann beispielsweise bei einem Einseiten-Formwerkzeug zwischen der Werkzeughälfte und dem Fasermaterial die Fließhilfe gelegt werden, so dass das Fasermaterial gleichmäßig mit dem Matrixmaterial (Harz) getränkt wird.

Um dabei eine Verbindung des Fasermaterials mit der Fließhilfe zu vermeiden, wenn das Harz ausgehärtet ist, ist es des weiteren ganz besonders vorteilhaft, wenn zwischen dem Fasermaterial und der Fließhilfe ein Abreißgewebe angeordnet wird, dass ein problemloses Entfernen der Fließhilfe nach dem Aushärten des Matrixmaterials ermöglicht.

Die vakuumabdichtbare Form kann beispielsweise mit einem flexiblen Formteil versehen sein, um das Formwerkzeug zusammen mit dem Fasermaterial vakuumdicht abzudichten.

Der Infusionsprozess kann wahlweise bei Umgebungstemperatur oder innerhalb eines Ofens bei angehobener Infusionstemperatur durchgeführt werden. Um eine hohe Bauteilqualität mit geringer Porosität und hohem Faservolumengehalt zu erhalten, sollte ein Feinvakuum innerhalb der Form von p< 1 mbar oder besser noch p<0,02 mbar erzielt werden. Die Kavitäten können wahlweise aus einem Faservließ hergestellt werden. Denkbar ist aber auch, dass auch ein großzügig vorgesehener Bauteilrand, welcher nach dem Herstellungsprozess entfernt wird, als Kavität dienen kann. Zur Vermeidung von Gaseinschlüssen innerhalb des fertigen Bauteils können Kavitäten auch innerhalb des Werkzeugs selber angeordnet werden, die dann nachträglich entfernt werden.

Die Erfindung wird anhand der beigefügten Zeichnungen beispielhaft näher erläutert. Es zeigen:
- Figur 1: - schematische Darstellung des erfindungsgemäßen Aufbaus;
- Figur 2a bis 2f: - schematische Darstellung des Evakuierungs- und Injektionsprozesses.

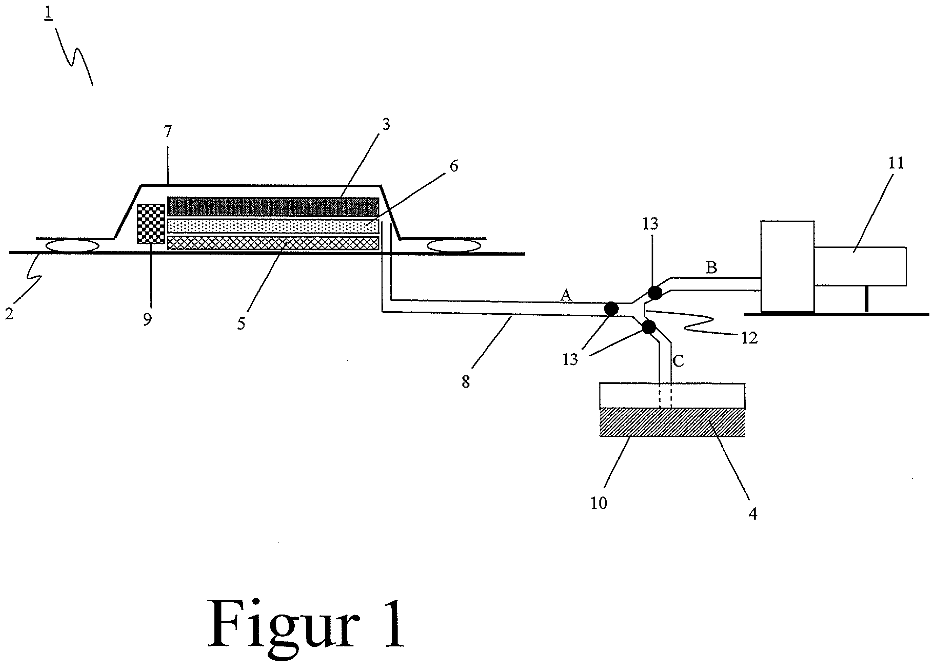

Figur 1 zeigt stark vereinfacht den prinzipiellen Aufbau der Vorrichtung. Eine vakuumabdichtbare Form 1 beinhaltet ein formgebendes Werkzeug 2, das in diesem Ausführungsbeispiel ein Einseiten-Formwerkzeug ist. Auf dem formgebenden Werkzeug 2 der Form 1 ist ein Fasermaterial beziehungsweise Faserhalbzeug 3 angeordnet, das während des Herstellungsprozesses mit einem Matrixmaterial beziehungsweise Harz 4 infiltriert werden soll. In dem Ausführungsbeispiel der Figur 1 ist zwischen dem Faserhalbzeug 3 und dem formgebenden Werkzeug 2 eine Fließhilfe 5 angeordnet, um die Verteilung des Harzes 4 über dem Bauteil zu beschleunigen. Um eine Verbindung des Faserhalbzeuges 3 mit der Fließhilfe 5 während des Aushärtens des Harzes 4 zu verhindern, ist zwischen dem Faserhalbzeug 3 und der Fließhilfe 5 ein Abreißgewebe 6 angeordnet, das eine derartige ungewünschte Verbindung verhindert. Die gesamte Form 1 wird dann mittels einer Vakuumfolie 7 druckdicht versiegelt, um so die Form 1 evakuieren zu können.

An einer Seite der Form 1, im Ausführungsbeispiel der Figur 1 am Bauteilrand, wird die kombinierte Injektions- und Evakuierungsleitung 8 positioniert, mit der die Form 1 evakuiert und mit Harz 4 injiziert werden kann. An der gegenüberliegenden Seite der Form 1 wird eine Kavität 9 positioniert, um den Druckunterschied zwischen dem Forminneren der Form 1 und dem Vorratsbehälter 10 für das Harz 4 über den Bauteilrand hinaus aufrecht zu erhalten. Eine solche Kavität 9 kann beispielsweise aus einem Faservließ hergestellt werden und sollte so platziert werden, dass sie sich erst nach dem Bauteil beziehungsweise Bauteilabschnitt mit Harz 4 füllt. Bei der Verwendung von Kavitäten 9 werden auch sich im Bauteil befindliche Gaseinschlüsse aufgefangen, was man auch als Spülvolumen betitelt.

Die gemeinsame Injektions- und Evakuierungsleitung 8 ist dabei an ihrem zweiten Ende sowohl mit einer Vakuumpumpe 11 (Drucksenke) sowie mit dem Vorratsbehälter 10, der das Harz 4 enthält, verbindbar. So wird im Ausführungsbeispiel der Figur 1 die kombinierte Injektions- und Evakuierungsleitung 8 mit einem T-Stück 12 verbunden, das zum einen die Vakuumpumpe 11 und zum anderen den Harzbehälter 10 mit der Injektions- und Evakuierungsleitung 8 verbindet. Mit Hilfe von entsprechenden Ventilen 13 kann so gesteuert werden, dass die Form 1 über die kombinierte Injektions- und Evakuierungsleitung 8 wahlweise mit der Vakuumpumpe 11 oder dem Vorratsbehälter 10 verbunden ist. Somit kann sowohl für den Injektionsprozess als auch für den Evakuierungsprozess ein und dieselbe Leitung 8 verwendet werden, was den prinzipiellen Anlagenaufbau vereinfacht, da nur ein einziger Anschluss für die Leitung an der Form 1 vorgesehen sein muss. Darüber hinaus wird erfindungsgemäß auf den ansonsten notwendigen Druckbehälter beziehungsweise Autoklav verzichtet, in dem die Form 1 sonst eingebracht und verbleiben müsste.

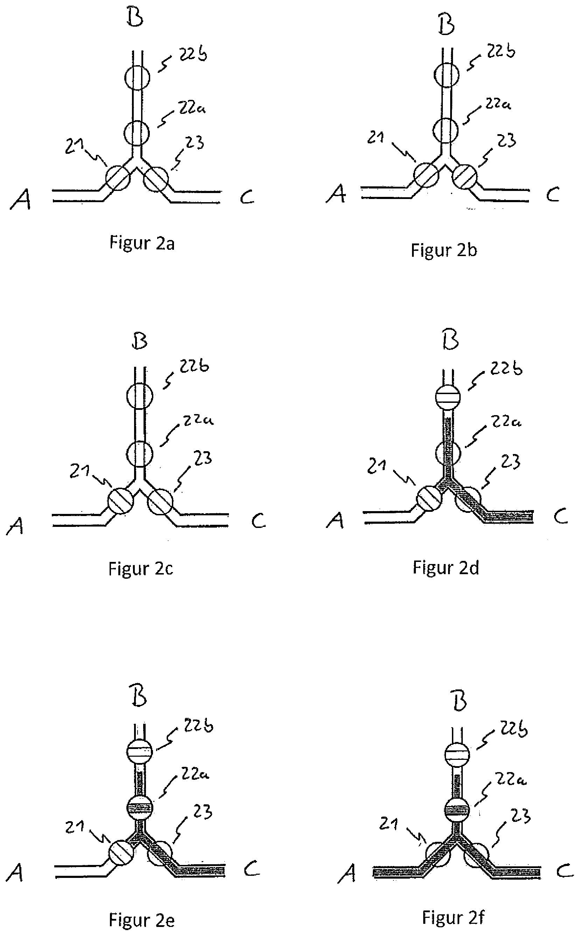

Kommen wir nun zu den Figuren 2a bis 2f, die den prinzipiellen Evakuierungs- und Injektionsprozess schematisch darstellen. In den Figuren 2a bis 2f ist dabei das aus der Figur 1 bekannte T-Stück 12 abgebildet, sowie die im Folgenden näher spezifizierten Ventile 13.

Figur 2a zeigt dabei den prinzipiellen Aufbau des T-Stückes 12. Mit der Anschlussseite A wird das T-Stück mit der kombinierten Injektions- und Evakuierungsleitung 8 verbunden. Über ein Ventil 21 kann der Zugriff hierauf gesteuert werden.

Mit der Anschlussseite B wird das T-Stück 12 mit der Vakuumpumpe 11 verbunden, wobei der Zugriff hierauf über die Ventile 22a und 22b, wie nachfolgend noch erläutert, gesteuert wird. Mit der Anschlussseite C wird das T-Stück 12 mit dem Vorratsbehälter 10 verbunden, wobei der Zugriff hierauf über das Ventil 23 gesteuert wird.

Nachdem der Fertigungsaufbau zusammengestellt wurde, kann die Form 1 im ersten Schritt evakuiert werden. Hierzu wird, wie in Figur 2b erkennbar, dass Ventil 23, welches den Zugriff auf den Vorratsbehälter 10 regelt, geschlossen. Die Form 1 ist jetzt über die kombinierte Injektions- und Evakuierungsleitung 8 mit der Vakuumpumpe 11 verbunden, so dass das Bauteil nun evakuiert werden kann.

Das Bauteil wird nun solange evakuiert, bis sich ein Feinvakuum von möglichst p<0,02 mbar eingestellt hat. Wenn dies erfolgreich eingestellt wurde, wird, wie in Figur 2c erkennbar, das Ventil 21 geschlossen und dann das Ventil 23 geöffnet. Die Vakuumpumpe 11 ist nun mit dem Harzbehälter 10 verbunden, so dass nun diese Leitung evakuiert werden kann. Infolge dessen steigt das Harz 4 von der Anschlussseite C des T-Stückes 12 hinauf in Richtung der Anschlussseite B der Vakuumpumpe 11, was in Figur 2d zu erkennen ist. Hat das aufsteigende Harz 4 das erste Ventil 22a erreicht, jedoch noch nicht das Ventil 22b, so wird das Ventil 22b geschlossen, um einen Harzeintritt in die Vakuumpumpe 11 zu verhindern.

Die Harzleitung ist nun evakuiert, was insbesondere zur Vermeidung von Lufteinschlüssen im Bauteil äußerst wichtig ist. Anschließend wird, wie in Figur 2e erkennbar, dass Ventil 22a ebenfalls geschlossen, um eine vollständige Evakuierung der Harzleitung sicherzustellen. Anschließend kann nun das Ventil 21 geöffnet werden, damit das Harz über die kombinierte Injektions- und Evakuierungsleitung 8 in das Bauteil fließt und somit das Faserhalbzeug mit Harz 4 tränkt (Figur 2f).

Sind alle Kavitäten gefüllt, kann der eigentliche Vernetzungsprozess des Matrixsystems gestartet und das Bauteil ausgehärtet werden.

## Patentansprüche

1. Verfahren zur Herstellung von faserverstärkten Kunststoffen durch Injektion eines Matrixmaterials (4) in eine vakuumabdichtbare Form (1) mit einem formgebenden Werkzeug (2) zur Aufnahme eines Fasermaterials (3), wobei eine kombinierte Injektions- und Evakuierungsleitung (8) an einem ersten Ende mit der vakuumabdichtbaren Form (1) und einem zweiten Ende wahlweise mit einem Vorratsbehälter (10) zur Aufnahme des Matrixmaterials (4) oder einer Drucksenke (11) derart verbunden wird, dass die Injektion des Matrixmaterials (4) und die Evakuierung der Form (1) über die kombinierte Injektions- und Evakuierungsleitung (8) erfolgt,
wobei in einer ersten Stufe die kombinierte Injektions- und Evakuierungsleitung (8) zur Evakuierung der Form (1) mit der Drucksenke (11) verbunden wird und in einer zweiten Stufe die Injektion des Matrixmaterials (4) erfolgt, indem nach Erreichen des Endvakuums in der Form (1) die Verbindung zur Drucksenke (11) unterbrochen wird und die kombinierte Injektions- und Evakuierungsleitung (8) mit dem das Matrixmaterial (4) enthaltenen Vorratsbehälter (10) verbunden wird , **dadurch gekennzeichnet dass** die vakuumabdichtbare Form während des Evakuier- und Injektionsvorgangs nicht in einem Druckbehälter bleibt

2. Verfahren nach Anspruch 1, **dadurch gekennzeichnet, dass** der Vorratsbehälter (10) während des Injektionsvorgangs auf einer zu der vakuumabdichtbaren Form (1) unterschiedlichen horizontalen Ebene angeordnet wird.

3. Verfahren nach Anspruch 1 oder 2, **dadurch gekennzeichnet, dass** der druckdicht verschließbare Vorratsbehälter (10) mit einem Über- oder Unterdruck beaufschlagt wird.

4. Verfahren nach einem der Ansprüche 1 bis 3, **dadurch gekennzeichnet, dass** in der Form (1) Kavitäten (9) platziert werden, insbesondere derart, dass der Abstand zwischen den Kavitäten und der Verbindungsseite der kombinierten Injektions- und Evakuierungsleitung (8) maximiert ist.

5. Verfahren nach Anspruch 4, **dadurch gekennzeichnet, dass** die Kavitäten (9) so in der Form (1) platziert werden, dass erst nach der Infiltration des Fasermaterials (3) mit Matrixmaterials (4) die Kavitäten (9) infiltriert werden.

6. Verfahren nach einem der Ansprüche 1 bis 5, **dadurch gekennzeichnet, dass** in der Form (1) eine Fließhilfe (5) eingelegt wird, um die Verteilung des Matrixmaterials (4) zu beschleunigen.

7. Verfahren nach Anspruch 6, **dadurch gekennzeichnet, dass** zwischen dem Fasermaterial (3) und der Flieshilfe (5) ein Abreißgewebe (6) angeordnet wird, um eine Verbindung des Fasermaterials (3) mit der Fließhilfe (5) zu vermeiden.

## Claims

1. Method for producing fibre-reinforced plastics by injection of a matrix material (4) into a vacuum-sealable mould (1) with a shaping die (2) for receiving a fibre material (3), a combined injection and evacuation line (8) being connected at a first end to the vacuum-sealable mould (1) and at a second end optionally to a reservoir (10) for receiving the matrix material (4) or to a pressure sink (11) in such a way that the injection of the matrix material (4) and the evacuation of the mould (1) take place by way of the combined injection and evacuation line (8),
wherein, in a first stage, the combined injection and evacuation line (8) is connected to the pressure sink (11) for the evacuation of the mould (1) and, in a second stage, injection of the matrix material (4) takes place, in that, after reaching the end vacuum in the mould (1), the connection to the pressure sink (11) is interrupted and the combined injection and evacuation line (8) is connected to the reservoir (10) containing the matrix material (4),
**characterized in that** the vacuum-sealable mould does not remain in a pressure vessel during the evacuation and injection process.

2. Method according to Claim 1, **characterized in that** the reservoir (10) is arranged on a horizontal level different from the vacuum-sealable mould (1) during the injection process.

3. Method according to Claim 1 or 2, **characterized in that** a positive or negative pressure is applied to the pressure-tightly sealable reservoir (10).

4. Method according to one of Claims 1 to 3, **characterized in that** cavities (9) are placed in the mould (1), in particular in such a way that the distance between the cavities and the connecting side of the combined injection and evacuation line (8) is maximized.

5. Method according to Claim 4, **characterized in that** the cavities (9) are placed in the mould (1) in such a way that only after the infiltration of the fibre material (3) with matrix material (4) are the cavities (9) infiltrated.

6. Method according to one of Claims 1 to 5, **characterized in that** a flow aid (5) is inserted in the mould (1) in order to speed up the distribution of the matrix material (4).

7. Method according to Claim 6, **characterized in that** a release fabric (6) is arranged between the fibre material (3) and the flow aid (5) in order to avoid bonding of the fibre material (3) to the flow aid (5).

## Revendications

1. Procédé de fabrication de matières plastiques renforcées par des fibres par injection d'un matériau de matrice (4) dans un moule pouvant être rendu étanche au vide (1) avec un outil de moulage (2) destiné à recevoir un matériau fibreux (3), dans lequel une conduite combinée d'injection et d'évacuation (8) est raccordée par une extrémité au moule pouvant être rendu étanche au vide (1) et par une deuxième extrémité au choix à un réservoir de stockage (10) destiné à contenir le matériau de matrice (4) ou à un puits de pression (11), de telle manière que l'injection du matériau de matrice (4) et l'évacuation du moule (1) soient effectuées par la conduite combinée d'injection et d'évacuation (8), dans lequel dans une première étape on raccorde la conduite combinée d'injection et d'évacuation (8) au puits de pression (11) pour l'évacuation du moule (1) et dans une deuxième étape on effectue l'injection du matériau de matrice (4), par le fait que l'on interrompt le raccordement au puits de pression (11) après avoir atteint le vide final dans le moule (1) et que l'on raccorde la conduite combinée d'injection et d'évacuation (8) au réservoir de stockage (10) contenant le matériau de matrice (4), **caractérisé en ce que** le moule pouvant être rendu étanche au vide ne reste pas dans un réservoir sous pression pendant l'opération d'évacuation et d'injection.

2. Procédé selon la revendication 1, **caractérisé en ce que** l'on dispose le réservoir de stockage (10) pendant l'opération d'injection sur un plan horizontal différent par rapport au moule pouvant être rendu étanche au vide (1).

3. Procédé selon la revendication 1 ou 2, **caractérisé en ce que** le réservoir de stockage (10) pouvant être fermé de façon étanche à la pression est soumis à une surpression ou à une dépression.

4. Procédé selon l'une quelconque des revendications 1 à 3, **caractérisé en ce que** l'on place des cavités (9) dans le moule (1), en particulier de telle manière que la distance entre les cavités et le côté de raccordement de la conduite combinée d'injection et d'évacuation (8) soit maximale.

5. Procédé selon la revendication 4, **caractérisé en ce que** l'on place les cavités (9) dans le moule (1), de telle manière que les cavités (9) ne soient infiltrées avec du matériau de matrice (4) qu'après l'infiltration du matériau fibreux (3).

6. Procédé selon l'une quelconque des revendications 1 à 5, **caractérisé en ce que** l'on introduit dans le moule (1) une aide à l'écoulement (5), afin d'accélérer la répartition du matériau de matrice (4).

7. Procédé selon la revendication 6, **caractérisé en ce que** l'on dispose entre le matériau fibreux (3) et l'aide à l'écoulement (5) un tissu décollable (6), pour éviter un assemblage du matériau fibreux (3) avec l'aide à l'écoulement (5).
